# EUROPÄISCHE PATENTSCHRIFT

(11) **EP 2 574 816 B1**
(45) Veröffentlichungstag und Bekanntmachung des Hinweises auf die Patenterteilung: **17.12.2014**
(21) Anmeldenummer: 12183258.8
(22) Anmeldetag: 06.09.2012
(51) Int. Cl.: F16D 65/18, F16D 65/56

(54) **Elektromechanische Betätigungsanordnung einer elektromechanischen Bremse und elektromechanische Bremse**
Electromechanical actuation assembly of an electromechanical brake and electromechanical brake
Agencement d'actionnement électromécanique d'un frein électromécanique et frein électromécanique

(30) Priorität: 30.09.2011 DE 102011083910
(43) Veröffentlichungstag der Anmeldung: 03.04.2013
(73) Patentinhaber: Siemens Aktiengesellschaft, 80333 München (DE)
(72) Erfinder: Rothfuß, Patrick, 82152 Planegg (DE); Schautt, Martin, 80636 München (DE); Schiffers, Toni, 41812 Erkelenz (DE)

(56) Entgegenhaltungen:
- DE-A1- 19 851 668
- DE-A1-102007 009 743
- DE-A1-102007 049 562
- DE-B3-102005 048 884

## Beschreibung

Die Erfindung liegt auf dem Gebiet der konstruktiven Gestaltung von Betätigungsanordnungen von Bremsen, die mittels elektrischer Bremssignale (insbesondere Bremskraftsollwerte) gesteuert werden.

An sich kommen beispielsweise bei Bremsen von Schienenfahrzeugen im Wesentlichen drei Typen derartiger Betätigungsanordnungen - nämlich elektropneumatische, elektrohydraulische sowie elektromechanische Betätigungsanordnungen zum Einsatz.

Bei Bremsen mit elektropneumatischer Betätigungsanordnung (elektropneumatische Bremsen, die auch als "ep-Bremsen" oder EPB's bezeichnet werden) und Bremsen mit elektrohydraulischer Betätigungsanordnung (elektrohydraulische Bremsen, die auch als "eh-Bremsen" oder "EHB's) bezeichnet werden) wird jeweils über ein Fluid Druck auf ein Stellglied (z.B. Zylinder) aufgebaut. So zeigt beispielsweise die Druckschrift EP 1747132100 eine elektropneumatische Betätigungsanordnung, bei der als Fluid Druckluft zum Einsatz kommt. Ferner zeigt beispielsweise die Druckschrift WO 01/00465 A1 eine elektrohydraulische Betätigungsanordnung, bei der als Fluid eine Bremsflüssigkeit verwendet wird.

Bei elektropneumatischen und elektrohydraulischen Betätigungsanordnungen werden zur Steuerung des auf das jeweilige Stellglied wirkenden Druckes Steuerventile eingesetzt, die elektronisch betätigt werden können. An diese Steuerventile können - beispielsweise über ein elektronisches Bremssteuergerät - elektrische Bremssignale gesendet werden. Die Steuerventile können als elektromagnetisch steuerbare Ventile ausgebildet sein, die mittels der elektrischen Bremssignale den Fluss des jeweiligen Fluides und damit den auf das jeweilige Stellglied wirkenden Druck kontrollieren.

Trotz Elektrifizierung (Bremssteuerart "el") haben ep-Bremsen und eh-Bremsen den Nachteil, dass zu ihrer Betätigung auf ein Übertragungsmedium in Form des jeweiligen Fluides nicht verzichtet werden kann. Nachteilig ist dabei, dass der Einsatz des Fluides die Bereitstellung watungsintensiver und mit hohem Energieverbrauch behafteter zusätzlicher Komponenten (z.B. Kompressoren und Pumpen) erfordert.

Bei Bremsen mit elektromechanischer Betätigungsanordnung (elektromechanische Bremsen, die auch als "em-Bremsen" oder "EMB's" bezeichnet werden) kommen elektromechanische Aktoren - beispielsweise in Form von Elektromotoren - zum Einsatz, die anstelle der Hydraulik oder Pneumatik die Betätigung einer Zuspannmechanik der Bremsen veranlassen.

Aus den Druckschriften DE 10 2005 048 884 B3 und DE 198 51 668 A1 sind beispielhafte Ausführungsformen elektromechanische Bremsen mit elektromechanischer Betätigungsanordnung bekannt. Bei den dort gezeigten Ausführungsformen ist jeweils ein elektromechanischer Aktor in Form eines Elektromotors mit einem reversiblen Kraftspeicher in Form eines Federspeichers kombiniert, um die gewünschte Bremskraft mit Unterstützung des Federspeichers (DE 10 2005 048 884 B3) oder sogar fast allein durch den Federspeicher (DE 198 51 668 A1) aufzubringen.

Die Erfindung befasst sich mit der konstruktiven Verbesserung einer derartigen elektromechanischen Betätigungsanordnung.

Die Erfindung betrifft insbesondere eine elektromechanische Betätigungsanordnung einer elektromechanischen Bremse mit einem elektromechanischen Aktor mit einer nachgeordneten ersten mechanischen Antriebs-Getriebeeinheit, mit einer reversiblen Kraftspeichereinrichtung mit einer nachgeordneten zweiten mechanischen Antriebs-Getriebeeinheit und mit einer um eine Drehachse drehbaren Koppeleinrichtung, die eine mechanische Betätigungs-Getriebeeinheit einerseits mit einem Abtrieb der ersten mechanischen Antriebs-Getriebeeinheit und andererseits mit einem Abtrieb der zweiten mechanische Antriebs-Getriebeeinheit koppelt, wobei die zweite mechanische Antriebs-Getriebeeinheit derart gestaltet ist, dass sie ein nichtlinear vom Drehwinkel der Koppeleinrichtung abhängiges Antriebsdrehmoment in die Koppeleinrichtung einleitet (DE 10 2005 048 884 B3).

Die Erfindung betrifft außerdem eine elektromechanische Bremse mit einer derartigen elektromechanischen Betätigungsanordnung, mit einem abzubremsenden Glied und mit einem Reibbelag zum reibschlüssigen Eingriff mit dem abzubremsenden Glied, bei der die elektromechanische Betätigungsanordnung dazu dient, den Reibbelag in reibschlüssigen Eingriff mit dem abzubremsenden Glied zu bewegen (DE 10 2005 048 884 B3).

Der Erfindung liegt die Aufgabe zu Grunde durch eine konstruktive Verbesserung die Betätigungsanordnung bei geringer elektrischer Energie - insbesondere für den Einsatz bei Bremsen von Schienenfahrzeugen - sowohl zur Erzeugung hoher Betätigungskräfte - die dann als Zuspannkräfte zwischen Bremsbelägen und Bremsscheibe wirken - als auch zur Umsetzung hochdynamischer Bremsregelvorgänge zu befähigen.

Diese Aufgabe wird erfindungsgemäß dadurch gelöst, dass die Koppeleinrichtung zwei mit Kurvenbahnen versehene Kurvenkörper drehfest kuppelt, wobei ein erster der Kurvenkörper den Antrieb der Betätigungs-Getriebeeinheit und ein zweiter der Kurvenkörper den Abtrieb der zweiten mechanischen Antriebs-Getriebeeinheit bildet.
Der auf die Koppeleinrichtung wirkende Aktor dient damit zur Einstellung des Drehwinkels der Koppeleinrichtung und somit zur Dosierung des nichtlinear vom Drehwinkel der Koppeleinrichtung abhängigen Antriebsdrehmomentes des zweiten Antriebs-Getriebes, das in die Koppeleinrichtung einleitet wird.
Der Einsatz der beiden Kurvenkörper gestattet es, deren Kurvenbahnen in vorteilhafter Weise mit voneinander unabhängig gestalteten Kurvenformen zu versehen. Somit besteht die Möglichkeit mit der erfindungsgemäßen Betätigungsanordnung individuelle Bremscharakteristiken umzusetzen. Insbesondere ist der Verlauf des Anteils, den die Kraftspeichereinrichtung zur Zuspannkraft beiträgt, über den Drehwinkel der Koppeleinrichtungindividuell variierbar und kann dabei größer, kleiner oder gleich einer der Zuspannkraft entgegen wirkenden Reaktionskraft sein.
Durch den Verzicht auf hydraulische oder pneumatische Komponenten kann auf Bremssteuerbefehle schneller reagiert werden, so dass schnellere Abbremsungen beispielsweise eines Fahrzeuges (insbesondere eines schienengebundenen Fahrzeuges) und kürzere Bremswege erzielt werden können Der Aufwand zur Wartung ist dabei vergleichsweise gering.

Weitere vorteilhafte Ausführungen der erfindungsgemäßen elektromechanischen Betätigungsanordnung sind in den Unteransprüchen 3 bis 5 gekennzeichnet.

Es wird als vorteilhaft angesehen, wenn der den Abtrieb der zweiten mechanischen Antriebs-Getriebeeinheit bildende zweite Kurvenkörper ein Exzenter mit exzentrischer Seilnut ist, wobei die exzentrische Seilnut die Kurvenbahn des zweiten Kurvenkörpers in Form einer Scheibenkurve bildet und wobei ein erstes Ende eines in der exzentrischen Seilnut geführten Seiles an einem Kraftspeicher der reversiblen Kraftspeichereinrichtung und ein zweites Ende des Seiles an dem Exzenter abgestützt ist.

Ferner wird als vorteilhaft angesehen, wenn der den Antrieb der Betätigungs-Getriebeeinheit bildende erste Kurvenkörper von einer ersten Kurventrommel gebildet ist, deren Stirnseite die Kurvenbahn des ersten Kurvenkörpers in Form einer räumlichen Steuerkurve bildet. - Dabei kann die erste Kurventrommel gemeinsam mit einer zweiten Kurventrommel und Wälzkörpern ein Kurventrommelgetriebe bilden, bei dem der Stirnseite der ersten Kurventrommel die Stirnseite der zweiten Kurventrommel gegenüber steht, die ebenfalls eine Kurvenbahn in Form einer räumlichen Steuerkurve bildet, und bei dem in einer zwischen den beiden räumlichen Steuerkurven gebildeten Teilungsfuge die Wälzkörper angeordnet sind, so dass die Summe von Drehmomenten, die mittels der drehbaren Koppeleinrichtung in die erste Kurventrommel eingeleitet werden, in eine Hubbewegung der zweiten Kurventrommel umgewandelt werden.

Bei der erfindungsgemäßen Betätigungsanordnung können der Verlauf der Hubbewegung des Kurventrommelgetriebes und der Verlauf des nichtlinear vom Drehwinkel der Koppeleinrichtung abhängigen Antriebsdrehmomentes unabhängig voneinander steigende, fallende oder gleichbleibende Abschnitte aufweisen.

Die Erfindung wird nachfolgend anhand von Ausführungsbeispielen näher erläutert. Dabei zeigen beispielhaft:
- Figur 1 und 2: zwei Ausführungsbeispiele der erfindungsgemäßen Bremse jeweils mit einer erfindungsgemäßen elektromechanischen Betätigungsanordnung,
- Figur 3: eine Außenansicht der erfindungsgemäßen elektromechanischen Betätigungsanordnung,
- Figur 4: eine Prinzipdarstellung der Komponenten und des Kraft- und Momentenverlaufs der in den Figuren 1 und 2 gezeigten erfindungsgemäßen Bremsen,
- Figur 5 und 6: Ausschnitte der erfindungsgemäßen Bremse,
- Figur 7: ein Kurventrommelgetriebe der elektromechanischen Betätigungsanordnung,
- Figuren 8 bis 10: das Kurventrommelgetriebe in verschiedenen Hubstellungen,
- Figur 11: eine reversible Kraftspeichereinrichtung mit Kraftspeicher und ein Exzentergetriebe mit Seil und Exzenter der elektromechanischen Betätigungsanordnung,
- Figuren 12 und 13: das Exzentergetriebe in zwei verschiedenen Stellungen,
- Figuren 14 und 15: eine Umlenkrolle für das Seil in zwei verschiedenen Stellungen und
- Figuren 16 bis 23: verschiedene Kennlinien der erfindungsgemäßen elektromechanischen Betätigungsanordnung

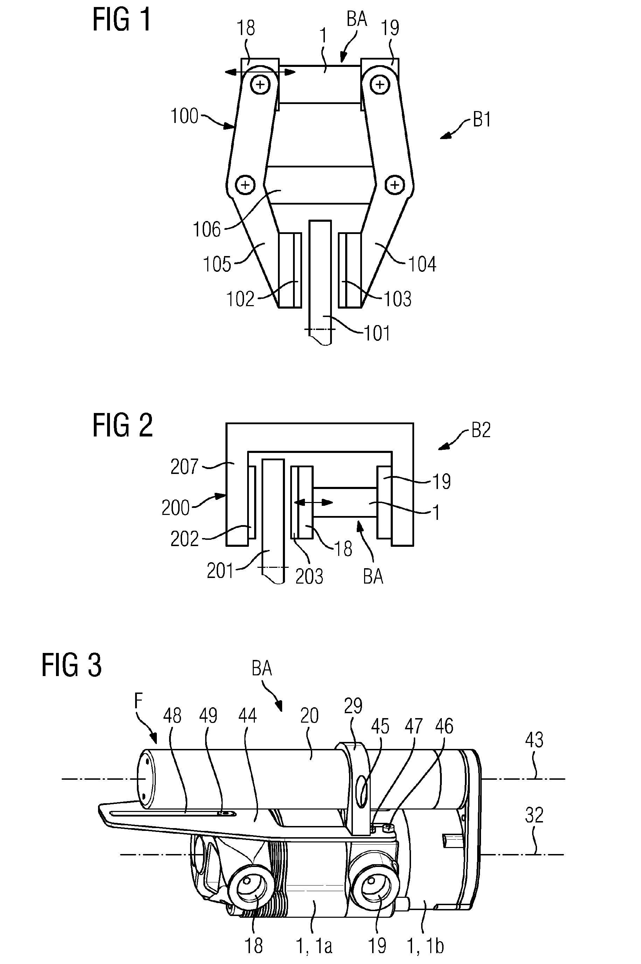

Die Figuren 1 und 2 zeigen schematisch zwei beispielhafte Ausführungsformen B1 und B2 der erfindungsgemäßen elektromechanischen Bremse jeweils mit der erfindungsgemäßen elektromechanischen Betätigungsanordnung BA. Die elektromechanische Betätigungsanordnung BA ist im Folgenden auch kurz als Bremsaktuator bezeichnet.

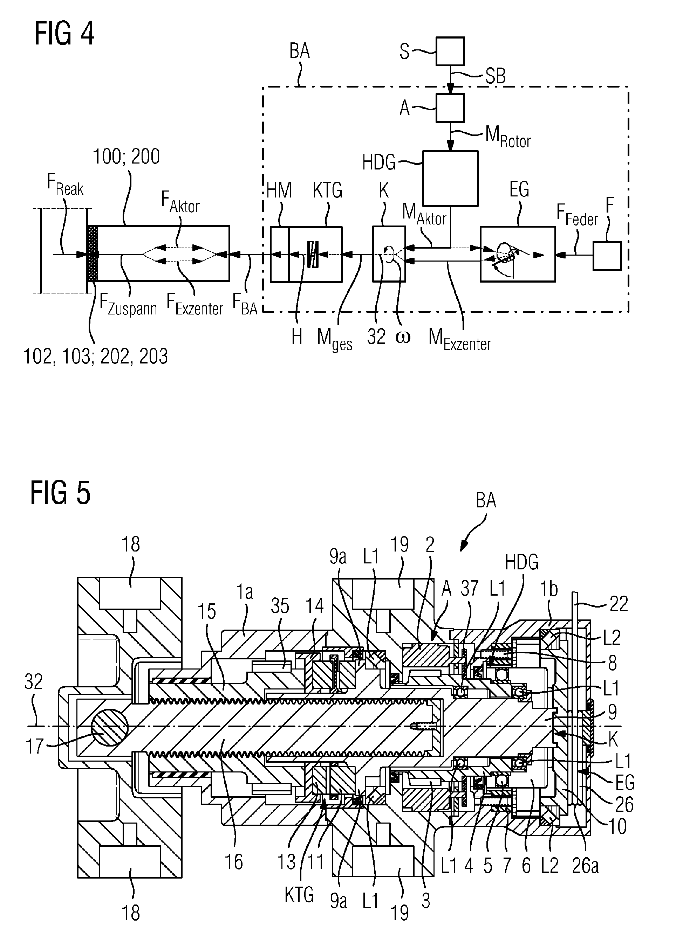

Neben dem Bremsaktuator BA weisen beide Ausführungsformen jeweils ein abzubremsendes Glied 101; 201 in Form einer Bremsscheibe und zwei im Folgenden auch als Bremsbeläge bezeichnete Reibbeläge 102, 103; 202, 203 zum reibschlüssigen Eingriff mit dem abzubremsenden Glied auf, die Teil einer hier als Zuspannmechanik ausgebildeten Übertragungsmechanik 100; 200 sind. Der Bremsaktuator BA dient dazu, die Reibbeläge in reibschlüssigen Eingriff mit dem abzubremsenden Glied zu bewegen. Hierzu wird durch eine Hubbewegung mit einem Hubverlauf H eine Betätigungskraft F_{BA} des Bremsaktuators BA in die Zuspannmechanik eingeleitet und die Bremsbeläge 102, 103; 202, 203 über der Bremsscheibe 101; 201 zugespannt, so dass die Bremsbeläge dann mit einer in der Figur 4 gezeigten, als Zuspannkraft F_{Zuspann} bezeichneten Normalkraft auf das abzubremsende Glied wirken. Die Zupannkraft F_{Zuspann} erzeugt dann eine Reibwirkung, welche die Bremsscheibe 101 verzögert. Dabei weist die Übertragungsmechanik 100 bei der in der Figur 1 gezeigten ersten Ausführungsform B1 der erfindungsgemäßen elektromechanischen Bremse eine Bremszange mit Bremshebeln 104, 105 und Bremsbrücke 106 auf. Bei der in der Figur 2 gezeigten zweiten Ausführungsform B2 der erfindungsgemäßen elektromechanischen Bremse weist die Übertragungsmechanik 200 einen Bremssattel 207 auf.

Gemäß Figur 3 weist der erfindungsgemäße Bremsaktuator BA eine reversible Kraftspeichereinrichtung F mit einem Speichergehäuse 20 und ein aus einem ersten Gehäuseteil 1a und einem zweiten Gehäuseteil 1b gebildetes Aktuatorgehäuse 1 auf. Das Aktuatorgehäuse 1 umgibt zusammen mit einer ersten Aufnahme 18 und einer zweiten Aufnahme 19 weitere, hier nicht gezeigte Bauteile des Bremsaktuators BA und schützt diese vor äußeren Einflüssen (z.B. Schmutz).

Bei der in der Figur 1 gezeigten ersten Ausführungsform B1 der erfindungsgemäßen elektromechanischen Bremse sind die zwei Bremshebel 104 und 105 auf der Bremsbrücke 106 drehbar gelagert, so dass die an den Enden der Bremshebel fest montierten Bremsbeläge 102 und 103 gegen die rotierende Bremsscheibe 101 gedrückt werden können. An den anderen Enden der Bremshebel 105 und 106 ist der Bremsaktuator BA gelagert, wobei die Hebel an den Aufnahmen 18 und 19 des Bremsaktuators drehbar angelenkt sind. Wie aus der Figur 1 ersichtlich ist, kann die Zuspannmechanik der Bremse B1 betätigt werden, indem die Aufnahme 18 die Hubbewegung mit dem Hubverlauf H ausführt, so dass die seitens des Bremsaktuators BA hervorgerufene Spreizung der Bremshebel 105 und 106 zu einem Zusammendrücken der Bremshebel auf Seiten der Bremsbeläge 102 und 103 führt. Zur Abstützung einer in der Figur 4 gezeigten Reaktionskraft F_{Reak}, die von der auf das abzubremsende Glied wirkenden Zuspannkraft F_{Zuspann} hervorgerufen wird, dient die zweite Aufnahme 19, die fest mit dem Aktuatorgehäuse 1 verbunden ist.

Bei der in der Figur 2 gezeigten zweiten Ausführungsform B2 der erfindungsgemäßen elektromechanischen Bremse wird der an die erste Aufnahme 18 seitlich angebrachter Bremsbelag 103 direkt gegen die abzubremsende Bremsscheibe 101 gedrückt. Auch hier dient die zweite Aufnahme 19 zur Abstützung der von der Zuspannkraft F_{Zuspann} hervorgerufenen Reaktionskraft F_{Reak}, wobei die zweite Aufnahme 19 einerseits fest mit dem Aktuatorgehäuse 1 und andererseits fest mit dem Bremssattel 207 verbunden ist. Auf der vom Bremsaktuator BA abgewandten Seite der Bremsscheibe 101 wird bei einer Zuspannbewegung der weitere Bremsbelag 102, der über geeignete Mittel fest mit dem Bremssattel 207 verbunden ist, in Reibkontakt mit der Bremsscheibe 101 gebracht.

Gemäß Figur 4 weist der erfindungsgemäße Bremsaktuator BA einen elektromechanischen Aktor A mit einer nachgeordneten ersten mechanischen Antriebs-Getriebeeinheit HDG, die reversible Kraftspeichereinrichtung F mit einer nachgeordneten zweiten mechanischen Antriebs-Getriebeeinheit EG, eine um eine Drehachse 32 drehbare Koppeleinrichtung K und eine mechanische Betätigungs-Getriebeeinheit KTG auf. Die um die Drehachse 32 drehbare Koppeleinrichtung K koppelt einen Antrieb der mechanischen Betätigungs-Getriebeeinheit KTG einerseits mit einem Abtrieb der ersten mechanischen Antriebs-Getriebeeinheit HDG und andererseits mit einem Abtrieb der zweiten mechanischen Antriebs-Getriebeeinheit EG.

Der elektromechanischen Aktor A und die reversible Kraftspeichereinrichtung F bilden zusammen mit ihren nachgeordneten Antriebs-Getriebeeinheiten HDG und EG die Antriebskomponenten des erfindungsgemäßen Bremsaktuators BA.

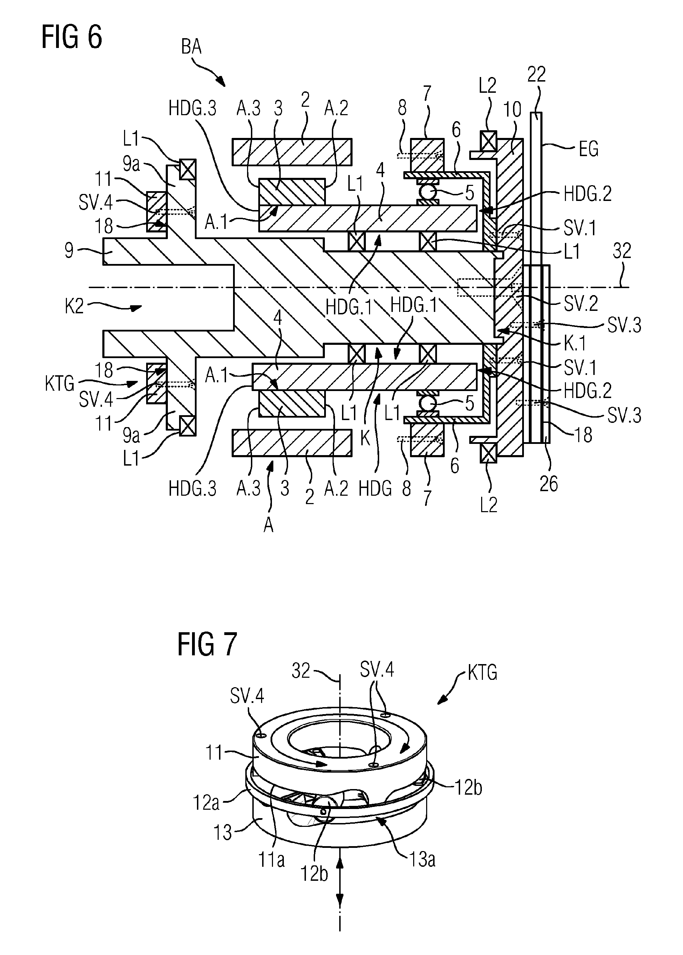

Gemäß den Figuren 5 und 6 ist der als Ganzes mit A bezeichnete elektromechanische Aktor als Elektromotor ausgebildet und verfügt über einen Stator 2 und einen Rotor 3. Der Stator 2 ist an einem starren Teil des Bremsaktuators BA - hier an dem Gehäuseteil 1b und der mit dem Gehäuseteil 1b fest verbundenen zweiten Aufnahme 19 - fest montiert.

Durch die dem Aktor nachgeordnete erste mechanische Antriebs-Getriebeeinheit, die als Ganzes mit HDG bezeichnet ist, wird das Drehmoment M_{Rotor} des Rotors gewandelt, um entsprechend der Übersetzung der ersten Antriebs-Getriebeeinheit HDG einen kleineren und damit hinsichtlich des elektrischen Stromverbrauchs sparsamen Elektromotor verwenden zu können.

Die erste Antriebs-Getriebeeinheit HDG ist vorzugsweise ein Harmonic-Drive-Getriebe mit Wave-Generator 4, 5, Flex-Spline 6 und Circular-Spline 7, das über eine vergleichsweise hohe Übersetzung verfügt und damit das vergleichsweise kleine Drehmoment M_{Rotor} des Rotors in ein vergleichsweise hohes Drehmoment M_{Aktor} des Flex-Spline 6 wandelt. Hierbei bildet ein elliptisches Element 4 des Wave-Generators, das fest auf dem Rotor 3 des Elektromotors angebracht ist und auf das ein Wälzlager 5 aufgeschrumpft ist, den Antrieb (das vom Elektromotor angetriebene Teil) der ersten Antriebs-Getriebeeinheit HDG. Den Abtrieb (das im Weiteren mit dem ersten Antriebsdrehmoment M_{Aktor} antreibende Teil) der ersten Antriebs-Getriebeeinheit HDG bildet der Flex-Spline 6, der von einer verformbaren, zylindrischen Stahlbüchse mit Außenverzahnung gebildet ist. Als Rahmen der ersten Antriebs-Getriebeeinheit dient der Circular-Spline 7, der von einem starren, mit einer Innenverzahnung versehenen, zylindrischen Außenring gebildet ist. Der Rahmen 7 ist an einem starren Teil der Bremse - hier mittels einer Schraubverbindung 8 an dem Gehäuseteil 1b des Aktuatorgehäuses fest montiert.

Der Wave-Generator verformt über das Wälzlager 5 den Flex-Spline 6, der sich in den gegenüberliegenden Bereichen der großen Ellipsenachse mit dem innenverzahnten, fixierten Circular-Spline 7 im Eingriff befindet. Mit Drehen des Wave-Generators verlagern sich die große Ellipsenachse und damit der Zahneingriffsbereich. Da der Flex-Spline 6 zwei Zähne weniger als der Circular-Spline 7 besitzt, vollzieht sich nach einer halben Umdrehung des Wave-Generators 4, 5 eine Relativbewegung zwischen Flex-Spline 6 und Circular-Spline 7 um die Größe eines Zahns. Dabei dreht sich der Flex-Spline 6 entgegengesetzt zur Antriebsdrehrichtung des Rotors 3 des Elektromotors.

Als erste mechanische Antriebs-Getriebeeinheit könnte aber auch ein anderer Getriebetyp, beispielsweise ein Planetengetriebe, verwendet werden. In diesem Fall würde ein vom Rotor des Elektromotors angetriebenes Sonnenrad den Antrieb und ein Planetenträger den Abtrieb bilden. Ein fest am Aktuatorgehäuse gehaltenes Hohlrad würde den Rahmen bilden und zur Übersetzung würden zwischen dem Sonnenrad und dem Hohlrad kämmende Planten dienen.

Abgangsseitig schließt sich an die erste mechanische Antriebs-Getriebeeinheit HDG die als Ganzes mit K bezeichnete Koppeleinrichtung an.

Die Koppeleinrichtung K weist eine innerhalb des Bremsaktuators BA über eine geeignete Lagerung L1 drehbar gelagerte Welle 9 in Form einer Hohlwelle und eine innerhalb des Bremsaktuators über eine geeignete Lagerung L2 drehbar gelagerte Drehscheibe 10 auf (vgl. insbesondere Figur 6).

Um Bauraum zu sparen, sind der Aktor A, die dem Aktor nachgeordnete erste Antriebs-Getriebeeinheit HDG und die Koppeleinrichtung K geschachtelt ineinander angeordnet. Dabei weisen der Aktor A und die dem Aktor nachgeordnete erste Antriebs-Getriebeeinheit HDG sich entlang der Drehachse 32 erstreckende Durchgriffsöffnungen A.1 bzw. HDG.1 auf. Die Koppeleinrichtung K durchgreift den Aktor A und die ihm nachgeordnete erste Antriebs-Getriebeeinheit HDG im Bereich dieser Durchgriffsöffnungen A.1 und HDG.1. An ein erstes Ende K.1 der Koppeleinrichtung K, das an Seiten A.2 und HDG.2 des Aktors und der erste Antriebs-Getriebeeinheit HDG aus den Durchgriffsöffnungen A.1 und HDG.1 ragt, sind die Abtriebe der beiden Antriebs-Getriebeeinheiten HDG und EG gekoppelt. Ferner ist an ein zweites Ende K.2 der Koppeleinrichtung K, das an Seiten A.3 und HDG.3 aus den Durchgriffsöffnungen A.1 und HDG.1 ragt, der Antrieb der Betätigungs-Getriebeeinheit KTG gekoppelt sind. Dabei sind die Seiten A.1 und A.2 bzw. HDG.1 und HDG.2 voneinander abgewandt.

Gemäß Figur 6 ist der Flex-Spline 6 mittels erster Schraubverbinden SV.1 mit der Drehscheibe 10 fest verbunden. Die Drehscheibe 10 ist über zumindest eine zweite Schraubverbindungen SV.2 mit der Hohlwelle 9 fest verbunden, wobei die Hohlwelle 9 das den Antrieb bildende elliptische Element 4 des Wave-Generators und den Rotor 3, der an den äußeren Umfang des elliptischen Elementes 4 des Wave-Generators gekoppelt ist, durchgreift.

Wie bereits erwähnt, ist neben der ersten mechanischen Antriebs-Getriebeeinheit HDG auch die der reversiblen Kraftspeichereinrichtung F nachgeordnete zweite mechanische Antriebs-Getriebeeinheit EG mittels der Koppeleinrichtung K an die Betätigungs-Getriebeeinheit KTG gekoppelt.

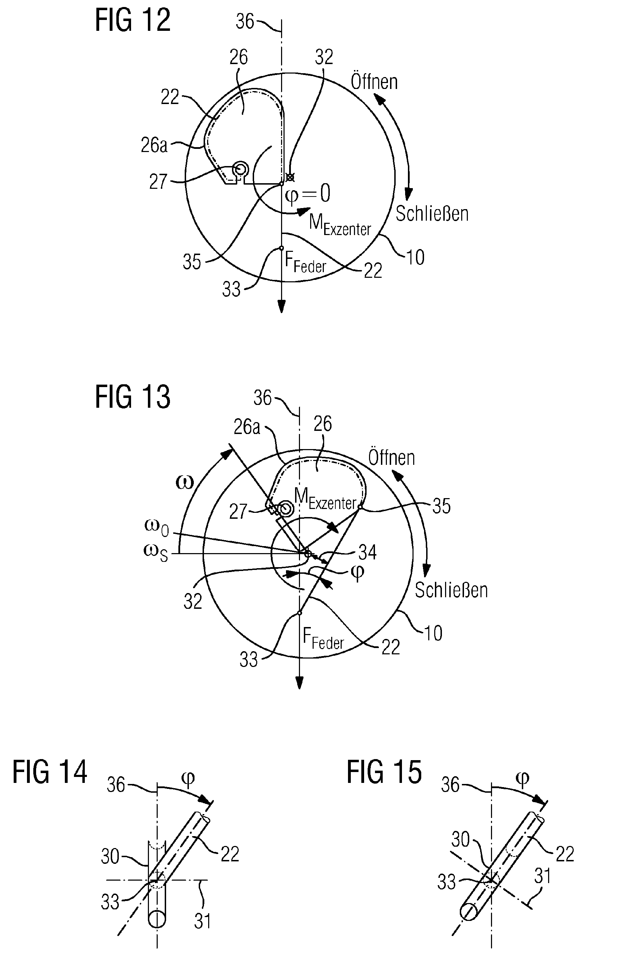

Hierzu kuppelt die Koppeleinrichtung K zwei mit Kurvenbahnen 26a (siehe Figuren 12 und 13) und 11a (siehe Figur 7) versehene Kurvenkörper 26 und 11 drehfest miteinander, wobei ein erster 11 der Kurvenkörper den Antrieb der Betätigungs-Getriebeeinheit KTG 26 und ein zweiter 26 der Kurvenkörper den Abtrieb der zweiten mechanischen Antriebs-Getriebeeinheit EG und bildet. Dabei weisen die Kurvenbahnen 11a und 26a der beiden Kurvenkörper 11 und 26 voneinander unabhängig gestaltete Kurvenformen auf.

Der zweite Kurvenkörper 26 ist über dritte Schraubverbindungen SV.3 fest mit der Drehscheibe 10 verbunden. Der erste Kurvenkörper 11 ist über vierte Schraubverbindungen SV.4 fest mit der Hohlwelle 9 verbunden.

Die als Ganzes mit EG bezeichnete zweite mechanische Antriebs-Getriebeeinheit ist ein Exzentergetriebe. Den Antrieb dieses Exzentergetriebes bildet ein Übertragungselement 22, in das die Kraft F_{Feder} eines Kraftspeichers 23 der reversiblen Kraftspeichereinrichtung F eingeleitet wird. Den Abtrieb bildet der zweite Kurvenkörper 26, der ein Exzenter ist. Der Exzenter wandelt die Kraft F_{Feder} in ein zweites Antriebsdrehmoment M_{Exzenter}. Der Exzenter weist eine exzentrische Seilnut auf, die die Kurvenbahn 26a des zweiten Kurvenkörpers 26 (des Exzenters) in Form einer Scheibenkurve bildet.

Die Betätigungs-Getriebeeinheit KTG ist ein Kurventrommelgetriebe, das an einem von der Hohlwelle 9 radial hervorstehenden Flansch 9a in axialer Richtung abgestützt.

Gemäß Figur 7 ist dabei der den Antrieb der Betätigungs-Getriebeeinheit KTG bildende erste Kurvenkörper 11 von einer ersten Kurventrommel 11 gebildet, deren Stirnseite die Kurvenbahn 11a des ersten Kurvenkörpers in Form einer ersten räumlichen Steuerkurve bildet.

Das Kurventrommelgetriebe KTG weist neben der ersten Kurventrommel 11 eine zweiten Kurventrommel 13 und an einem Ring 12a drehbare Wälzkörpern 12b auf, wobei der Stirnseite 11a der ersten Kurventrommel die Stirnseite der zweiten Kurventrommel gegenüber steht, die ebenfalls eine Kurvenbahn 13a in Form einer räumlichen Steuerkurve bildet, und wobei in einer zwischen den beiden räumlichen Steuerkurven gebildeten Teilungsfuge die Wälzkörper 12b angeordnet sind. Die erste Kurventrommel 11 ist mit der Hohlwelle 9 der drehbaren Koppeleinrichtung K mittels der vierten Schraubverbindungen SV.4 fest verbunden, so dass die Summe der beiden Antriebsdrehmomente M_{Aktor} und M_{Exzenter}, die in die drehbare Koppeleinrichtung K eingeleitet und von dieser als ein Gesamtdrehmoment M_{ges} auf die erste Kurventrommel 11 übertragen werden, in die axiale Hubbewegung mit dem Hubverlauf H der zweiten Kurventrommel 13 umgewandelt werden.

Die Hubbewegung mit dem Hubverlauf H der zweiten Kurventrommel 13 und damit die Betätigungskraft F_{BA} der elektromechanische Betätigungsanordnung BA wirken mittelbar über eine hier als Hubmechanik HM ausgebildete Übertragungsmechanik, deren Ende die erste Aufnahme 18 bildet, auf die Zuspannmechanik, die diese Betätigungskraft F_{BA} in die Zuspannbewegung umgesetzt, wodurch schlussendlich die Reibbeläge mit der Zuspannkraft F_{Zuspann} an das abzubremsende Glied gedrückt und die Bremswirkung erzeugt wird.

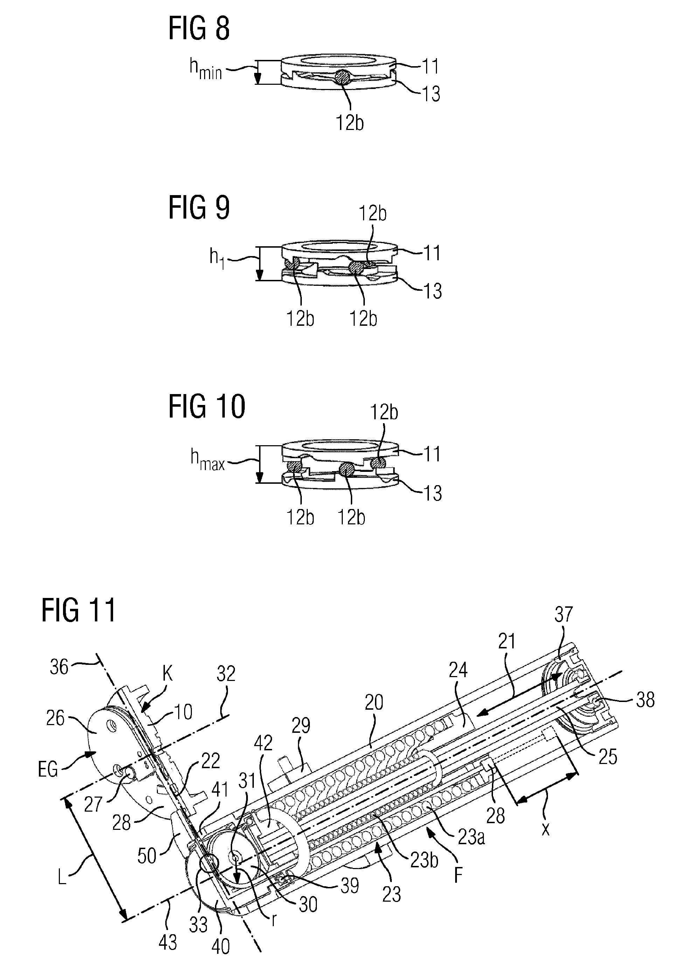

Die Figuren 8 bis 10 verdeutlichen schematisch die Funktionsweise des Kurventrommelgetriebes KTG in drei unterschiedlichen Bremsstellungen "offen", "mittlere Betätigung" und "maximale Betätigung". Durch Verdrehen der antriebsseitigen Kurventrommel 11 rollen die zwischen den Kurventrommeln 11 und 13 gelagerten Wälzkörper 12b auf den Kurvenbahnen 11a und 13a ab, wodurch die Kurventrommeln auseinandergespreizt werden. Ausgehend von einem minimalen Hub hₘᵢₙ der Kurventrommel 13 bei geöffnetem Bremszustand - also bei der Bremsstellung "offen" gemäß Figur 8 - erhöht sich durch zunehmende Verdrehung der antriebsseitigen Kurventrommel 11 der Hub h bis zu einem Hub h1 bei der Bremsstellung "mittlere Betätigung" gemäß Figur 9 und dann weiter bis der maximale Hub hₘₐₓ der Kurventrommel 13 bei der Bremsstellung "maximale Betätigung" gemäß Figur 10 erreicht wird. Dieser maximale Hub h2 entspricht dann also der vollen Bremsbetätigung. Um die Bremse wieder in den geöffneten Bremszustand - also in die Bremsstellung "offen" - zu überführen, wird der beschriebene Antriebsvorgang in rückwärtiger Weise vorgenommen.

Die Figur 5 verdeutlicht die Übertragung der Hubbewegung der zweiten Kurventrommel 13 auf die erste Aufnahme 18. Zunächst wird die Hubbewegung der zweiten Kurventrommel 13 über eine Lageranordnung 14 auf eine Mutter 15 übertragen. Die Mutter 15 vollzieht dann ebenfalls die Hubbewegung der Kurventrommel 13, wobei die auf einer Spindel 16 drehbar gelagerte Mutter 15 die Spindel 16 mitnimmt und entsprechend axial verschiebt. In dem aus dem Gehäuseteil 1a herausragenden Ende der Spindel 16 ist ein Querstift 17 eingefügt, über den die erste Aufnahme 18 gelagert ist. Folglich vollzieht auch die erste Aufnahme 18 dieselbe Hubbewegung. In einer vorteilhaften Ausgestaltung kann der Querstift 17 als Sensor ausgebildet sein, der beispielsweise die Zuspannkräfte misst.

Wie schon oben angedeutet, wird bei der Betätigung der Bremszuspanneinrichtung der Bremse der elektromechanische Aktor A von der reversiblen Kraftspeichereinrichtung F unterstützt, so dass zur Entlastung des elektromechanischen Aktors A ein Teil der zum Schließen und / oder Öffnen der Zuspannmechanik der Bremse notwendigen Betätigungskraft F_{BA} und damit ein Teil der Zuspannkraft F_{zuspann} - mit der die Bremsbeläge auf die Bremsscheibe wirken - in der reversiblen Kraftspeichereinrichtung F ihren Ursprung hat.

Die Figur 11 zeigt die reversible Kraftspeichereinrichtung F gemeinsam mit der zweiten Antriebs-Getriebeeinheit EG und der Drehscheibe 10 der Koppeleinrichtung K. Diese Anordnung wird im Folgenden auch als Speicher-Exzenter-Kombination bezeichnet.

Die reversible Kraftspeichereinrichtung umfasst ein Speichergehäuse 20 in dem ein reversibler Kraftspeicher 23 in Form eines Federspeichers gelagert ist. Je nach Ausführung kann der Federspeicher eine oder mehrere Speicherfedern 23a, 23b beispielsweise in Form von Spiralfedern enthalten.

Bei der gezeigten reversiblen Kraftspeichereinrichtung F wurde eine geschachtelte Anordnung von zwei Speicherfedern 23a und 23b gewählt, bei der die Speicherfeder 23b mit kleinerem Durchmesser von der Speicherfeder 23a mit größerem Durchmesser umgeben ist. Dadurch kann der Energiegehalt des Federspeichers erhöht werden, ohne den Bauraum des Speichergehäuses 20 speziell in axialer Richtung wesentlich vergrößern zu müssen.

Dabei zeigt die Figur 11 den reversibler Kraftspeicher 23 in seinem aufgeladenen Zustand, bei dem die Speicherfedern 23a und 23b vorgespannt sind. Damit der Federspeicher 23 den Aktor zur Betätigung der Zuspannmechanik (Öffnen und / oder Schließen) unterstützen kann, muss der Federspeicher 23 seine gespeicherte Kraft kontrolliert an die Zuspannmechanik 100; 200 abgeben können. Hierfür steht dem Federspeicher 23 ein gewisses Hubvolumen im Speichergehäuse 20 zum Entspannen zur Verfügung, das sich über die Länge 21 erstreckt. Die beim Entspannen des Federspeichers 23 frei werdende Kraft wird auf das Übertragungselement 22 übertragen, das als ein Zugkräfte übertragendes Element in Form eines Seiles ausgebildet ist. Alternativ kann das Übertragungselement 22 auch andersartig ausgebildet sein, beispielsweise als Kette.

Die Kraftspeichereinrichtung F weist einen ersten und einen zweiten Stützkörper auf, zwischen denen der Federspeicher 23 abgestützt ist. Der erste Stützkörper in Form einer Federaufnahme 42 ist in Bezug auf das Speichergehäuse axial fest gehalten. Der zweite Stützkörper in Form einer Hülse 24 ist unter der Kraft der Speicherfedern 23a, 23b axial verschiebbar. Ein erstes Ende des Seiles 22 ist mittels einer ersten Anbindung 28 fest in die Hülse 24 eingebracht. Wie demnach ersichtlich ist, wird das Seil 22 bei Hubbewegungen der Speicherfedern 23a, 23b mitgezogen. Damit die Hülse 24 oder die Speicherfedern 23a, 23b bei den Hubbewegungen nicht im Speichergehäuse 20 verkanten können, ist die Hülse 24 auf einer Axialführung 25 gelagert, um welche die Speicherfedern 23a, 23b koaxial angeordnet sind.

Um nun letztendlich die von den Speicherfedern 23a, 23b auf das Seil 22 aufgebrachte Kraft gesteuert in die Koppeleinrichtung K einzuleiten, ist - wie bereits erwähnt - der Exzenter 26 vorgesehen. Um die exzentrische Kurvenbahn 26a dieses Exzenters - also um das Exzenterprofil - ist das Seil 22 gelenkt. Außerdem ist ein zweites Ende des Seiles 22 mittels einer zweiten Anbindung 27 fest an dem Exzenter 26 montiert. Das Seil umschlingt dabei gemäß den Figuren 12 und 13 die exzentrische Kurvenbahn 26a des Exzenters zwischen der Anbindung 27 und einem Anlagepunkt 35. Von dem Anlagepunkt 35 spannt sich das Seil 22 auf einen Fixpunkt 33. Dieser Fixpunkt 33 befindet sich vorteilhafter Weise auf einem Umlenkelement in Form einer Umlenkrolle 30, die einen Umlenkradius r aufweist und über die das Seil 22 in das Speichergehäuse 20 geführt bzw. gelenkt ist. Dabei durchläuft eine gedachte Achse 36 den Fixpunkt 33 und den Anlagepunkt 35 des Seiles 22 in der in Figur 12 gezeigten unbetätigten Stellung des Exzenters 26.

Wie in der Figur 4 gezeigt, ist zur Steuerung der erfindungsgemäßen Bremse eine Steuereinheit S vorgesehen die zur Umsetzung einer Bremsfunktion an den elektromechanischen Aktor A Steuerbefehle SB übermittelt. Neben Grundfunktionen wie Bremse zuspannen ("Schließen") und Bremse lösen ("Öffnen"), können auch höhere Bremsfunktionen wie z.B. Gleitschutz, Antriebschlupfregelung, Traktionskontrolle, ABS, Not- bzw. Schnellbremsung, etc. umgesetzt werden.

Zum Zuspannen der Bremse wird der Aktor A durch die Steuereinheit S so angesteuert, dass sich in Folge dieser Ansteuerung der Rotor 3 in seiner Schließ-Richtung und damit die mit dem Flex-Spline 6 und dem Exzenter 26 fest verschraubte Drehscheibe 10 der Koppeleinrichtung K gemeinsam in ihrer in den Figuren 12 und 13 gezeigten Richtung "Schließen" um die Drehachse 32 drehen. Zum Verstellen der Drehscheibe 10 und dem mit ihr fest verbundenen Exzenter wirkt also das Drehmoment M_{Aktor} mittelbar über die Drehscheibe 10 als ein Betätigungsmoment auf den Exzenter.

Wie die Figuren 12 und 13 zeigen, dreht sich der Exzenter 26 beim Zuspannen der Bremse aus einer in der Figur 12 gezeigten ersten Position in eine in der Figur 13 gezeigte zweite Position. Dabei nimmt der Exzenter 26 das Seil 22, das sich während der Zuspannbewegung teilweise abwickelt, mit, so dass auch das Seil 22 in Bezug auf seinen Fixpunkt 33 ausschwenkt. Folglich vergrößert sich der Normalenabstand 34 zwischen dem Seil 22 und der Drehachse 32 des Exzenters 26. Dieser Abstand 34 entspricht dem das Drehmoment M_{Exzenter} bildenden "Hebelarm" zwischen Seil 22 und Drehachse 32. Bedingt durch die Auslenkung also vergrößert sich der Abstand 34 des mit der Federkraft F_{Feder} beaufschlagten Seiles von der Drehachse 32, woraus sich ausgangsseitig von der ersten, nicht-linearen Antriebs-Getriebeeinheit das zweite Antriebsdrehmoment M_{Exzenter} ergibt.

Wie die Figur 13 zeigt, wird sich also einerseits mit zunehmendem Verdrehwinkel ω der Drehscheibe 10 das Seil 22 vom äußeren Exzenterprofil 26a um die Abwickellänge x abwickeln, und andererseits wird das Seil 22 durch den Exzenter 26 ausgelenkt. Infolgedessen stellt sich gemessen von der in der Figur 12 gezeigten unbetätigten Stellung, welche von der gedachten Achse 36 charakterisiert wird, und dem Seilstück, das zwischen dem Fixpunkt 33 und dem ausgelenkten Anlagepunkt 35 gespannt ist, ein Auslenkwinkel ϕ ein.

Um zu verhindern, dass das Seil in Folge seiner Auslenkung um den Auslenkwinkel ϕ im Bereich des Fixpunktes 33 aus der Führung der Umlenkrolle gezogen und dann auf den Führungskanten der Umlenkrolle 30 aufrieben oder zwischen Umlenkrolle 30 und Speichergehäuse 20 verklemmt wird, ist die komplette Seilführung innerhalb des Speichergehäuses 20 um eine Achse 43 drehbar gelagert. Sowohl die Umlenkrolle 30 als auch die Hülse 24 einschließlich der Axialführung 25 werden entsprechend dem Auslenkwinkel ϕ nachgeführt. Wie die Figuren 14 und 15 verdeutlichen, kann dadurch die Umlenkrolle 30 zusammen mit dem Seil 22 um den Winkel ϕ geschwenkt werden. Das Seil 22 wird somit über den gesamten Umlenkbereich (hier: 90°) von der Umlenkrolle 30 geführt und nicht - wie mit gestrichelter Linie in der Figur 14 gezeigt - aus der Führung der Rolle herausgezogen.

Zur technischen Umsetzung weist das Speichergehäuse 20, wie Figur 11 zeigt, an ihrer Oberseite ein oberes Lager 39 und an ihrer Unterseite ein unteres Lager 38 auf. Das untere Lager 38 ist dabei vorteilhafter Weise in einem Gehäusedeckel 37, der die Gehäuseunterseite fest abschließt, integriert. Die Axialführung 25 hingegen ist in dem unteren Lager 38 drehbar aufgenommen. Folglich wird auch die auf der Axialführung 25 axial verschiebbar gelagerte Hülse 24, die zu der Übertragung der Kraft des Federspeichers 23 auf das Seil 22 dient und in der sowohl das eine Ende des Seiles als auch der Federspeicher 23 aufgenommen sind, zusammen mit der Axialführung 25 drehen.

In dem an der Oberseite des Speichergehäuses integrierten oberen Lager 39, ist ein Gehäuseteil der Kraftspeichereinrichtung in Form eines oberen Lagerdeckels 40 drehbar gelagert ist. Dieser Lagerdeckel 40 ist mit der Axialführung 25 fest verbunden - bildet also mit der Axialführung 25 eine Baueinheit, die über die Lagerung in den Lagern 38 und 39 statisch bestimmt gelagert ist. Abweichend hiervon können der Lagerdeckel und die Axialführung als separate Bauteile auch getrennt gelagert werden.

Der Lagerdeckel 40 schließt das Speichergehäuse an der Oberseite ab und ist zudem dazu ausgebildet, die Umlenkrolle 30 drehbar aufzunehmen. Hierzu ist die Drehachse 31 der Umlenkrolle 30 in den Lagerdeckel 40 integriert, so dass sich die Umlenkrolle 30 zur Führung des Seiles 22 um ihre Achse drehen kann.

Wird nun also die Speicher-Exzenter-Kombination zum Schließen der Bremse betätigt, so wird sich der Exzenter 26 ausgehend von dem in der Figur 12 gezeigten unbetätigten Zustand in Richtung des in der Figur 13 gezeigten betätigten Zustands bewegen. Dabei wird sich das Seil 22 mit zunehmendem Verdrehwinkel ω vom Exzenterprofil abwickeln und, je nachdem wie weit der Exzenter 26 ausschwenkt, entsprechend mit dem Auslenkwinkel ϕ auslenken. Da die Achse 31 der Umlenkrolle 30 - wie oben beschrieben - drehbar gelagert ist, wird die Umlenkrolle 30 von dem auslenkenden Seil 22 mitgenommen und lenkt ebenfalls mit dem Winkel ϕ aus. Vorteilhafter Weise ist das Seil 22 über einen Mitnehmer 43 geführt. So liegt das Seil 22 über den gesamten Umlenkbereich an der Umlenkrolle 30 an und ermöglicht eine optimale Seilführung für die Längsbewegungen des Seiles 22 ins bzw. aus dem Speichergehäuse. Die Längsbewegung des Seiles überträgt sich von dem Seil 22 auf die verschiebbare Hülse 24. Entsprechend der axialen Verschiebung der Hülse 24, die der Abwicklungslänge des Seiles entspricht, kann sich der Federspeicher entspannen und seine (unterschiedlich große) Federkraft an die Hülse 24 abgeben, die wiederum auf das Seil 22 übertragen wird. Da die Hülse 24 über die erste Anbindung 28 des ersten Endes des Seiles ebenfalls um den Winkel ϕ mitdreht, wird verhindert, dass sich das Seil 22 um die Axialführung 25 wickeln kann. Damit dabei aber der Federspeicher 23, der auch an der Hülse 24 angreift, nicht tordiert wird, ist vorteilhafter Weise auch der zweite Stützkörper in Form der oberen Federaufnahme 42 drehbar gelagert. Dazu ist die Federaufnahme 42 fest mit der Axialführung 25 verbunden.

Da eine Austrittsöffnung 41 für das Seil 22 in den Lagerdeckel 40 integriert ist, schwenkt auch diese Austrittsöffnung 41 um den Winkel ϕ mit. So genügt im Vergleich zu einer feststehenden Austrittsöffnung, die zur freien Führung des Seiles als Längsschlitz ausgebildet sein müsste, ein relativ kleines Loch. Dadurch ist für einen besseren Schutz vor dem Eintritt von Fremdkörpern bzw. Schmutz in das Speichergehäuse sowie für eine bessere Dichtigkeit des Speichergehäuses - beispielsweise gegenüber Feuchtigkeit - gesorgt werden.

Das Seil 22 ist im Speichergehäuse 20 nicht mittig geführt. Eine mittige Führung des Seiles wäre aber alternativ möglich. Vorteil der erfindungsgemäßen Auslegung ist jedoch, dass die Umlenkrolle 30 mit größerem Umlenkradius r gewählt werden kann, wodurch sich zugleich der Biegeradius des Seils 22 vergrößert. Ferner wird das Seil zwischen den beiden Federn 23a und 23b geführt, was eine besonders kompakte Anordnung der einzelnen Elemente der reversiblen Kraftspeichereinrichtung F ermöglicht.

Gemäß Figur 3 ist das Speichergehäuse 20 mittels eines Verbinders 44 und Schraubverbindungen 45, 46, 47 mechanisch fest mit der zweiten Aufnahme 19 und damit auch mechanisch fest mit dem Aktuatorgehäuse 1 verbunden. Das Speichergehäuse 20 weist für die Befestigung einen entsprechenden Flansch 29 oder dergleichen auf. Der Verbinder 44 weist eine Führungsnut 48 auf, in die zur Führung der ersten Aufnahme 18 ein an dieser ersten Aufnahme 18 ausgebildeter Führungsnocken 49 eingreift.

Über den Montageabstand zwischen dem Speichergehäuse 20 und dem Aktuatorgehäuse 1 ist auch der Abstand L zwischen der Drehachse 32 und der Schwenkachse 43 definiert. Wie die Figur 13 zeigt, stellt sich der Winkel ϕ zwischen der gedachten Achse 36 und dem Seilstück ein, das über den Anlagepunkt 35 und den Fixpunkt 33 gespannt ist. Wird der Montageabstand vergrößert, wandert der Fixpunkt 33 auf der gedachten Achse 36 vom Exzenter 26 weg. Dadurch verringert sich der Winkel ϕ bei gleichem Verdrehwinkel ϕ. Dies gilt auch umgekehrt, denn bei Verringerung des Montageabstandes vergrößert sich der Winkel ϕ. Somit kann über den Montageabstand bzw. über den Abstand L zwischen der Drehachse 32 und der Schwenkachse 43 das am zweite Antriebsdrehmoment M_{Exzenter} beeinflusst werden, welches sich aufgrund der Zugkraft des an dem Exzenter 26 am Anlagepunkt 35 angreifenden Seiles 22 einstellt. Unter Beibehaltung der übrigen Parameter - speziell Verdrehwinkel ω bzw. Auslenkung des Anlagepunktes 35 - würde das Drehmoment mit geringerem Winkel ϕ steigen und mit größerem Winkel ϕ fallen.

Der Fixpunkt 33 ist als konstruktiver Hilfspunkt gedacht, der sich auf der gedachten Achse 36 befindet. Um diesen Punkt lenkt das Seil 22 mit dem Winkel ϕ aus, wenn das Seil 22 durch den Exzenter 26 am Anlagepunkt 35 ausgeschwenkt wird. Dieser Fixpunkt 33 ist konstruktiv auf die Umlenkrolle 30 gelegt, wobei der Punkt bei Rollbewegungen der Umlenkrolle 30 um ihre Achse 31 nicht mitdreht. Die Umlenkung kann bei alternativen Speicher-Exzenter-Kombinationen jedoch entfallen. So könnte der Federspeicher beispielsweise auch koaxial bzw. parallel zur gedachten Achse 36 ausgerichtet werden, was eine Umlenkung des Seiles überflüssig machen würde. Jedoch bedarf es weiterhin der Definition eines Fixpunktes, da von diesem der Winkel ϕ und damit die Größe des zweiten Antriebsdrehmomentes M_{Exzenter} - wie im Absatz zuvor erläutert - abhängen.

In vorteilhafter, hier nicht gezeigter Ausgestaltung ist vorgesehen, den Fixpunkt 33 über eine Verstelleinrichtung (nicht gezeigt) zu verstellen, um die oben beschriebenen Auswirkungen gezielt auszunutzen. Vorzugsweise ist die Verstelleinrichtung als Rastmechanismus ausgebildet, so dass sich durch ein Einrasten des Punktes nach seiner Verstellung wieder ein fester "Fixpunkt" ergibt. Vorteilhafter Weise ist eine derartige Verstelleinrichtung in den Verbinder 29 integriert.

Die elektromechanische Betätigungsanordnung BA weist ferner zum Ausgleich von Belag- und / oder Scheibenverschleiß eine Belagnachstelleinrichtung auf. Wie bereits erläutert wurde, dient zum Übertragen der Hubbewegung, welche von dem Kurventrommelgetriebe 11, 12, 13 erzeugt wird, eine Hubmechanik HM mit einer Mutter-Spindel-Kombination 15, 16, um die Zuspannmechanik der Bremse zuzuspannen. Neben dieser Hubbewegung kann die Mutter 15 auf der Spindel 16 verdreht werden, so dass sich die axiale Position der Spindel in der Mutter verstellen lässt. Auf diese Weise kann der axiale Abstand zwischen den Aufnahmen 18 und 19 justiert werden, wodurch das Lüftspiel zwischen den Bremsbelägen 102, 103; 202, 203 und der Bremsscheibe 101; 201 eingestellt werden kann. Beispielsweise lässt sich damit das Lüftspiel unabhängig vom Verschleiß der Reibpaarungen konstant halten.

Die Verdrehung der Mutter 15 wird durch einen separaten Antrieb ausgelöst. Dieser Antrieb kann über einen entsprechenden Zugang im Gehäuseteil 1a des Aktuatorgehäuses 1 der Bremse ein Zahnrad 35 antreiben, das fest mit der Mutter 15 verbunden ist.

Des Weiteren kann die elektromechanische Betätigungsanordnung BA eine hier nicht dargestellte Sensorik aufweisen, um die zur Umsetzung der Steuerung bzw. Regelung notwendigen Informationen über die Zustände der elektromechanischen Betätigungsanordnung BA zu erfassen. Beispielsweise kann über einen Drehwinkelsensor 37 der Drehwinkel des Aktors 2, 3 gemessen werden, der zugleich als Maß für den Hub h dient.

Da die Abwickellänge x des Seiles 22, die dem Federhub entspricht, vom Verdrehwinkel ω des Exzenters 26 abhängt, kann ferner der Verdrehwinkel des Exzenters 26 ermittelt werden und als Maß für die von den Speicherfeder 23, 23b freigegebenen Kraft dienen. Denn die freigegebene Kraft F_{Feder} hängt gemäß der Gleichung F_{Feder} = k•x neben der Federkonstante k von der Abwickellänge x des Seiles 22 ab.

Die vorstehend beschriebene elektromechanische Betätigungsanordnung und die vorstehend beschriebenen Bremsen sine vornehmlich - jedoch nicht ausschließlich - für Bahnanwendungen bestimmt. Sie sind darüber hinaus geeignet, in anderen technischen Gebieten oder Anwendungen eingesetzt zu werden. Hierzu zählen ohne die Auflistung abzuschließen Werkzeug- und Produktionsmaschinen, Windkraftanlagen, Förderwerke, Personen- oder Güterbeförderungsanlagen (Lifte, Rolltreppen, Förderbänder, Seilbahnen, etc.) sowie weitere Fahrzeuge aller Art (z.B. für Schiffsschrauben, Helikopter, Straßenfahrzeuge).

Der vorstehend beschriebenen Kraft- und Momentenverlauf der erfindungsgemäßen elektromechanische Bremse B1; B2 ist schematisch noch einmal in der Figur 4 gezeigt.

So wandelt also die erste mechanische Antriebs-Getriebeeinheit das Rotor-Drehmoment M_{Rotor} in das erste Antriebsdrehmoment M_{Aktor} und leitet dieses als Ausgangsgröße in die Koppeleinrichtung K ein. Die zweite mechanische Antriebs-Getriebeeinheit EG wandelt die Speicherkraft F_{Feder} der reversiblen Kraftspeichereinrichtung, die an dem in seiner Länge vom Verdrehwinkel ω der Koppeleinrichtung abhängigen Hebelarm 34 des Exzenters 26 und damit auch der Drehscheibe 10 wirkt, als Eingangsgröße in das zweites Antriebsdrehmoment M_{Exzenter} und leitet dieses als Ausgangsgröße in die Koppeleinrichtung K ein. Die Betätigungs-Getriebeeinheit KTG wandelt die Summe M_{ges} = M_{Aktor} + M_{Exzenter} der beiden Antriebsdrehmomente M_{Aktor} und M_{Exzenter} als Eingangsgröße in eine Hubbewegung mit einem Hubverlauf H und damit in eine Betätigungskraft F_{BA} als Ausgangsgröße um, aus der dann die Zuspannbewegung der Zuspannmechanik und damit die das abzubremsende Glied aufgebrachte Zuspannkraft F_{zuspann} resultiert. In Figur 4 ist die aufgebrachte Zuspannkraft F_{zuspann} symbolisch in ihre Anteile aufgeteilt gezeigt, von denen ein erster Anteil auf den ersten Antriebsdrehmoment M_{Aktor} und ein zweiter Anteil auf den zweiten Antriebsdrehmoment M_{Exzenter} basiert.

Demnach ermöglicht die erfindungsgemäße Bremse das eingangs erläuterte Bremsprinzip, nach dem die Erzeugung der Zuspannkraft F_{Zuspann} aus dem Zusammenwirken eines elektromechanischen Aktors und einer reversiblen Kraftspeichereinrichtung resultiert. Da die reversible Kraftspeichereinrichtung ihre Speicherkraft über die nachgeordnete zweite Antriebs-Getriebeeinheit an der gemeinsamen Koppeleinrichtung K abgibt, addieren sich an dieser Stelle die beiden aus den Kraftanteilen von Aktor und reversiblen Kraftspeichereinrichtung resultierenden Antriebsdrehmomente.

Zur Regulierung des vom Federspeicher 23 freizugeben Betrages der Speicherkraft F_{Feder} dient dabei der ebenfalls am Aufbau der Zuspannkraft F_{Zuspann} beteiligte elektromechanische Aktor A mit seiner nachgeschalteten ersten Antriebs-Getriebeeinheit HDG.

Aufgrund der gemeinsamen drehfesten Kupplung von Flex-Spline 6, Koppeleinrichtung K und Exzenter 26 bewirkt der Aktor A bei der Betätigung der Bremse eine gleichzeitige Verdrehung des Exzenters 26. Entsprechend der Verdrehung stellt sich das zweite Antriebsdrehmoment M_{Exzenter} am Exzenter 26 ein, welches aus der von der Verdrehung ausgelösten Kraftfreigabe des Federspeichers erzeugt wird und den Aktor somit unterstützt. Der Aktor A mit seiner nachgeschalteten ersten Antriebs-Getriebeeinheit HDG fungiert also sowohl als Zuspannorgan als auch als Dosiereinrichtung des mechanischen Federspeichers 23.

Da bei zunehmender Betätigung der Bremse die Reaktionskraft F_{Reak,} welche entgegengesetzt der Zuspannkraft F_{Zuspann} wirkt, gleichsam ansteigt, ist die reversible Kraftspeichereinrichtung F einschließlich der Koppeleinrichtung K vorteilhafter Weise derart beschaffen, dass sich bei zunehmender Betätigung der Bremse zugleich ein ansteigendes zweites Antriebsdrehmoment M_{Exzenter} des Exzenters einstellt. Damit muss der Aktor mit seiner nachgeschalteten ersten Antriebs-Getriebeeinheit HDG für den Zuspannvorgang nur noch die Kraftdifferenz F_{Aktor} = F_{Diff} = F_{Reak} - F_{Exzenter} zwischen der Reaktionskraft F_{Reak} und dem vom Federspeicher 23 erzeugten Kraftanteil F_{Feder} ausgleichen. Bei der Formel F_{Aktor} = F_{Diff} = F_{Reak} - F_{Exzenter} sind die wirkungsgradbedingten Verluste bereits einkalkuliert und werden nicht über einen gesonderten Parameter (z.B. Wirkungsgradfaktor η) ausgewiesen. Verluste können beispielsweise aus Reibung (Lagerpaarungen, Getriebepaarungen) oder Rastmomente des Elektromotors, etc resultieren.

In umgekehrter Weise wird bei einem Lösevorgang der Bremse die bremseninhärente Reaktionskraft F_{Reak} genutzt, den mechanischen Federspeicher 23 wieder aufzuladen. Hierzu betätigt der Aktor A mit seiner nachgeschalteten ersten Antriebs-Getriebeeinheit HDG den Exzenter 26 in den Figuren 12 und 13 gezeigten Richtung "Öffnen" (Löserichtung), wodurch der Exzenter 26 das Seil 22 aufwickelt und somit den Federspeicher 23 wieder spannt. Auch in diesem Fall wird der Aktor kraftmäßig unterstützt, denn die beim Lösen der Bremse frei werdende elastische Verformungsenergie, die insbesondere in der Zuspannmechanik gespeichert ist, senkt die vom Aktor A aufzubringende Kraft zum Verstellen des Exzenters 26 in die in den Figuren 12 und 13 gezeigte Richtung "Öffnen".

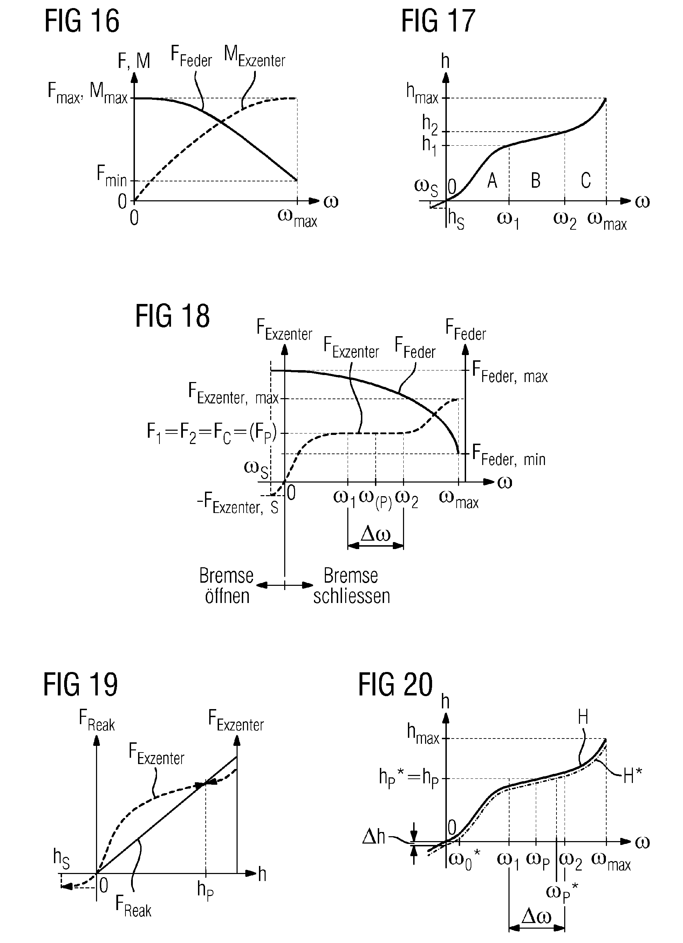

Die erfindungsgemäße Elektromechanische Betätigungsanordnung weist mit dem Betätigungs-Getriebeeinheit KTG ein erstes nicht-lineare Getriebe und mit der zweiten mechanischen Antriebs-Getriebeeinheit EG ein zweites nicht-lineare Getriebe auf, die mittels der Koppeleinrichtung K miteinander gekoppelt sind. Dabei wird der erfindungsgemäßen Bremse mit dem ersten nicht-lineare Getriebe eine erste nicht-lineare Kennlinie in Form einer Hubkennlinie (gegenseitige Abhängigkeit des Hubes h und des Drehwinkels ω gemäß Figur 17) und mit dem zweiten nicht-lineare Getriebe eine zweite nicht-lineare Kennlinie in Form einer Drehmomentkennlinie (gegenseitige Abhängigkeit des zweites Antriebsdrehmoment M_{Exzenter} und des Drehwinkels ω gemäß Figur 16) eingeprägt.

Das erste nicht-lineare Getriebe erzeugt in Abhängigkeit vom Verdrehwinkel ω die der Kurvenform der Kurventrommeln entsprechende Hubbewegung, die zu einer Zuspannbewegung der Bremse führt. Wie in Figur 17 gezeigt, kann somit ein nichtlinearer Hubverlauf mit unterschiedlichen Steigungen erzeugt werden. Mit dem ersten nicht-lineare Getriebe können also bei zunehmendem Drehwinkel ω steigende, fallende oder gleichbleibende Abschnitte des Hubverlaufes erzeugt werden.
Dabei wird der in der Figur 17 gezeigte Abschnitt h<0 des Hubes, der zur Überwindung des Lüftspiels dient, im Folgenden als Leerhub und der Abschnitt h>=0 als Zuspannhub bezeichnet, wobei nur der Zuspannhub zum Aufbau einer Zuspannkraft beiträgt.
Das zweite nicht-lineare Getriebe weist den Exzenter 26 auf und ist mit dem Kraftspeicher 23 verbunden. In Abhängigkeit vom Drewinkel ω beaufschlagt der Kraftspeicher 23 den Exzenter 26 mit seiner Speicherkraft (vgl. Kennlinie F_{Feder} in Figur 16), die in das der Kurvenform des Exzenters entsprechende zweite Antriebsdrehmoment umgewandelt wird (vgl. Kennlinie M_{Exzenter} in Figur 16), so dass ein Teil F_{Exzenter} des zur Betätigung der Bremse notwendigen Zuspannkraft F_{Zuspann} vom Kraftspeicher aufgebracht wird. Mit dem zweiten nicht-lineare Getriebe können also bei zunehmendem Drehwinkel ω steigende, fallende oder gleichbleibende Abschnitte des Verlaufes des zweiten Antriebsdrehmomentes M_{Exzenter} erzeugt werden.

Mittels der erfindungsgemäßen elektromechanischen Betätigungsanordnung und der erfindungsgemäßen elektromechanischen Bremse sind verschiedene vorteilhafte Funktionen umsetzbar.

Eine erste vorteilhafte Funktion besteht darin, einem Kraftabfall der reversiblen Kraftspeichereinrichtung optimal entgegen zu wirken.
Hierzu werden der Federspeicher 23 und der Exzenter 26 in besonderer Weise aufeinander abgestimmt. Aufgrund der Federkennlinie des Federspeichers, welche den Federn 23a, 23b eingeprägt ist, sinkt die Federkraft F_{Feder} mit zunehmendem Federweg bei gleichzeitiger Entspannung ab. Infolge dessen würde mit zunehmender Betätigung der Bremse der von dem Federspeicher 23 eingebrachte Kraftanteil abfallen, obwohl für die zunehmende Betätigung der Bremse eine steigende Betätigungskraft F_{Zuspann} benötigt wird.
Um daher dem Kraftabfall an den Speicherfedern 23a, 23b während des Zuspannens der Bremse entgegenzuwirken, ist das Profil des Exzenters 26 derart ausgestaltet, dass sich beim Verdrehen des Exzenters 26 in Zuspannrichtung der das Drehmoment M_{Exzenter} bildende Hebelarm 34 so stark vergrößert, dass dadurch der Kraftabfall an den Speicherfedern 23a, 23b überkompensiert wird, und ein ansteigendes Drehmoment M_{Exzenter} erzeugt werden kann. Wie die Figur 16 beispielhaft zeigt, fällt zwar die freiwerdende Kraft F_{Feder} des Federspeichers mit zunehmendem Verdrehwinkel ω ab, aber das am Exzenter erzeugte Drehmoment M_{Exzenter} steigt an. An dieser Stelle sei angemerkt, dass die Kurvenverläufe nur schematisch angedeutet sind und stark von der gezeigten Figur abweichen können.
Der Kraft- und Momentenverlauf der erfindungsgemäßen Bremse ist jedoch mit Vorteil so gestaltet, dass die Stellkräfte des Aktors A relativ klein gehalten sind, so dass beim Betrieb der Bremse die Stellkräfte des Aktors weniger dazu genutzt werden, die zum Schließen oder Öffnen der Bremse notwendigen Kräfte zu erzeugen, als vielmehr dazu beizutragen, dass die Bremse aufgrund der Dynamik des Aktors A hochdynamische Bremsfunktionen (z.B. ABS, ESP, Gleitschutz, etc.) umsetzten kann.
Die erfindungsgemäße Bremse könnte derart ausgelegt werden, dass sich die Kraftdifferenz zwischen der Reaktionskraft F_{Reak} und dem von der reversiblen Kraftspeichereinrichtung erzeugten Kraftanteil F_{Exzenter} nahezu über einen gesamten Betriebsbereich quasi zu Null ergibt. Alternativ wäre sogar eine Art "Sicherheitsbremse" oder Kupplung umsetzbar, bei welcher der mechanische Federspeicher 23 über den Exzenter 26 ein derart großes Drehmoment M_{Exzenter} erzeugt, dass die Bremse standardmäßig immer zuspannt und der Aktor A ausschließlich zum Lösen der Bremse benötigt wird.

Eine zweite vorteilhafte Funktion ist die Umsetzung einer schnelle Ansprechbarkeit, die einerseits mit einer feinfühligen Einstellbarkeit einer mittleren Zuspannkraft für Betriebsbremsungen und andererseits mit der Bereitstellung einer hohen Zuspannkraft bei Notbremsungen gepaart werden kann. Wie bereits erwähnt, lassen sich mit dem ersten nicht-linearen Getriebe KTG bei fortschreitender Verdrehung der ersten Kurventrommel 11 steigende, fallende oder konstant bleibende Hubbewegungen der zweiten Kurventrommel 13 erzeugen.
Vorzugsweise wird ein Hubverlauf umgesetzt, wie er in Figur 17 gezeigt ist. So steigt im dort gezeigten Bereich A der Hub der Kurventrommel 13 relativ schnell an, bis nach einem Verdrehwinkel ω1 ein Hub h1 erreicht wird. Dieser Bereich A wird vornehmlich dazu genutzt, das Lüftspiel schnell zu überwinden (die Bremsbeläge schnell an die Bremsscheibe anzulegen) und einen anfänglich zügigen Kraftaufbau zu forcieren. Auf diese Weise kann eine schnell ansprechende Bremse realisiert werden. Der folgende Bereich B, der sich zwischen ω1 und ω2 erstreckt, ist speziell für Betriebsbremsungen optimiert, bei denen mittlere Zuspannkräfte gefordert werden. Aus Komfortgründen soll hier ein zunehmendes Verdrehen der Kurventrommel 11 nicht zu einem ruckartigen Erhöhen des Hubes führen, sondern ein feinfühliges Einstellen der Bremskraft ermöglichen. Daher verläuft in diesem Bereich B der Hub relativ flach, vorzugsweise mit konstanter Steigung. Übersteigt der Verdrehwinkel der Kurventrommel 11 den Verdrehwinkel ω2, steigt der Hub der Kurventrommel 13 wieder rasant an. Somit ist der Kurvenverlauf des Zustellhubes in einem hier mit C bezeichneten Bereich speziell für Notbremsungen mit hohen Zuspannkräften ausgelegt, die aufgrund der gegebenen Dringlichkeit der Notsituation wieder schnell aufgebaut werden müssen. Komfortaspekte spielen daher nur eine untergeordnete Rolle. Der maximale Hub hmax wird erreicht, wenn das Kurventrommelgetriebe bei ωₘₐₓ seinen maximalen Verdrehwinkel erreicht hat.
Es sei an dieser Stelle ausdrücklich darauf hingewiesen, dass durch entsprechende Gestaltung der Kurvenbahnen des Exzenters und der Kurventrommeln des Kurventrommelgetriebes beliebige, von dem gezeigten Hubverlauf abweichende Hubverläufe in Abhängigkeit des Verdrehwinkels ω darstellbar sind.

Eine dritte vorteilhafte Funktion sieht die Umsetzung zumindest zweier stabiler Zustände - insbesondere die Umsetzung eines stabilen, offenen, kraftlosen Bremszustandes und die Umsetzung eines stabilen, geschlossenen Zustandes (beispielsweise zur Umsetzung einer Parkbremsfunktion) vor.
Etwa proportional zur steigenden Hubbewegung der Kurventrommel 13 erhöht sich auch die bremseninhärente Reaktionskraft F_{Reak}, die der Zuspannkraft F_{zuspann} entgegenwirkt. Daher wird einerseits zum Zuspannen der Bremse eine Zuspannkraft benötigt, welche die in der jeweiligen Hubstellung wirkenden Reaktionskraft übersteigt Andererseits wird zum Aufrechterhalten einer bestimmten Hubposition eine Zuspannkraft benötigt, welche gleich groß der in der jeweiligen Hubstellung wirkenden Reaktionskraft ist. Insofern sind die Kurvenbahnen der beiden nicht-linearen Getriebe abzustimmen, damit im Zusammenwirken mit dem die Steuerbefehle SB umsetzenden Aktors A die beiden genannten Bedingungen für die Bremse erfüllt sind. Um nun mit der erfindungsgemäßen Bremse stabile Zustände, beispielsweise die Parkbremsung zu realisieren, würde es genügen, eine bestimmte Hubposition anzufahren und diese mit der notwendigen Zuspannkraft aufrechtzuerhalten. Jedoch ist ein ständiges Aufbringen einer Zuspannkraft, insbesondere durch den Aktor A nicht vorteilhaft, da dieser elektrische Energie verbrauch.
Wie die Figur 18 zeigt können die beiden nicht-linearen Getriebe derart aufeinander abgestimmt werden, dass bei zumindest einem ersten Drehwinkel ω_{S} die Betätigungs-Getriebeeinheit unter alleiniger Wirkung des zweiten Antriebsdrehmomentes einen vorbestimmten ersten Hubwert hₛ und bei zumindest einem zweiten Drehwinkel ω_{P} die Betätigungs-Getriebeeinheit unter alleiniger Wirkung des zweiten Antriebsdrehmomentes entgegen der Reaktionskraft einen vorbestimmten zweiten Hubwert hₚ hält.
Die Bremse wird also kraftmäßig allein von dem Federspeicher 23 offen gehalten und der zur Aufrechterhaltung der Zuspannkraft in Form der Parkbremskraft notwendige Hub h_{P} wird kraftmäßig allein von dem Federspeicher 23 erzeugt. Vom Exzenter 26 wird dazu über die Koppeleinrichtung K ein entsprechend großes Drehmoment auf die Kurventrommel 11 wirken, so dass sich an der Kurventrommel 13 der benötigte "Parkbrems-Hub" einstellt.
Es muss sich hierzu aber ein Kräftegleichgewicht zwischen Zuspannkraft und Reaktionskraft einstellen, um die Parkbremskraft dauerhaft ohne Einwirkung des Aktors A aufrecht zu erhalten. Je nach geforderter Größe der Parkbremskraft kann ein größerer oder kleiner Hub h erforderlich sein. Wird beispielsweise der maximale Hub für die Parkbremskraft gefordert, so muss die Auslegung von dem Exzenter und der Federkraft sicherstellen, dass das maximale Drehmoment allein ohne zusätzliches Drehmoment des Aktors A ausreichend ist.
Gemäß Figur 19 ist zur Herstellung des Kräftegleichgewichtes vorgesehen, dass sich der Verlauf der Reaktionskraft F_{Reak}, der aus der nichtlinear vom Drehwinkel der Koppeleinrichtung abhängigen Hubbewegung resultiert, und der Verlauf des von dem zweiten Antriebsdrehmoment aufgebrachten Anteils F_{Exzenter} der Zuspannkraft, bei dem vorbestimmten zweiten Hubwert hₚ schneiden.
Eine Bistabilität kann dabei dadurch realisiert werden, dass bei allen Hubwerten zwischen dem vorbestimmten ersten Hubwert hₛ und dem vorbestimmten zweiten Hubwert hₚ die Reaktionskraft größer als der von dem zweiten Antriebsdrehmoment aufgebrachte Anteils F_{Exzenter} der Zuspannkraft ist.

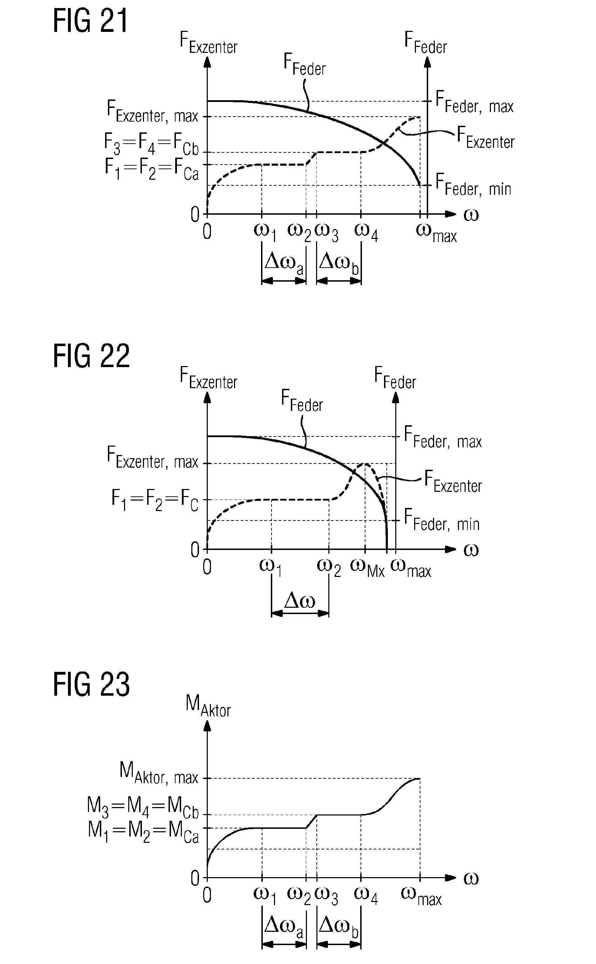

Eine vierte vorteilhafte Funktion sieht gemäß Figur 20 vor, bei einer Veränderung des Lüftspiels zwischen Bremsbelägen und Bremsscheibe eine Bremsbelagnachstellung bei geschlossener Bremse und konstantem Anteil F_{Exzenter} der von dem zweiten Antriebsdrehmoment aufgebrachten Zuspannkraft umzusetzen. Hierzu werden gemäß den Figuren Figur 18 und 21 die beiden nicht-linearen Getriebe derart aufeinander abgestimmt, dass die Betätigungs-Getriebeeinheit zur Erzeugung einer gleichbleibenden Zuspannkraft über einen ersten vorbestimmten Drehwinkelbereich (ω1 bis ω2) bei einem ersten konstanten Anteil F_{Exzenter} = F_{C} (wobei bei einer Parkbremsung F_{C} = F_{P} gilt) bzw. F_{Exzenter} = F_{Ca} der von dem zweiten Antriebsdrehmoment aufgebrachten Zuspannkraft entgegen der Reaktionskraft einem vorbestimmten Hubwert hₚ hält.
Ferner können die beiden nicht-linearen Getriebe gemäß Figur 21 derart aufeinander abgestimmt werden, dass die Betätigungs-Getriebeeinheit zur Erzeugung einer gleichbleibenden Zuspannkraft über zumindest einen weiteren vorbestimmten Drehwinkelbereich (ω3 bis ω4) bei einem weiteren konstanten Anteil (F_{Exzenter} = F_{cb}) der von dem zweiten Antriebsdrehmoment aufgebrachten Zuspannkraft entgegen der Reaktionskraft bei einem vorbestimmten Hubwert hₚ gehalten wird (vgl. Figur 21).

Als eine fünfte vorteilhafte Funktion ist eine Sicherheitsfunktion in Form einer Kraftreduzierung der Bremse vorgesehen. Hierzu werden die beiden nicht-linearen Getriebe derart aufeinander abgestimmt, dass gemäß Figur 22 nach Erreichen eines maximalen Wertes F_{Exzenter}, ₘₐₓ des Anteils F_{Exzenter} der von dem zweiten Antriebsdrehmoment MExzenter und damit des Anteils F_{Exzenter} für Verdrehwinkel ω > ω_{Mx} abfallen. So kann beispielsweise gewährleistet werden, dass bei einem ungewollten Zustellen des Aktors der Kraftanteil des Exzenters und damit die Zuspannkraft reduziert werden. Aufgrund der reduzierten Zuspannkraft ließe sich ein Blockieren eines Rades ebenso verhindern, wie auch eine extreme Hitzeentwicklung mit Brandgefahr. Um die Bremse im Fehlerfall komplett zu öffnen, könnte der Hubverlauf h analog zu Figur 22 nach einem maximalen Hubwert ganz auf Null abfallen (nicht gezeigt). D.h. die Bremse würde trotz voller Verdrehung ωₘₐₓ keinen Zuspannhub erzeugen und damit keine Reaktionskraft (Bremskraft) hervorrufen. Die Bremse würde also im Falle ungewollter (maximaler) Betätigung des Aktor notlösen.

Eine sechste vorteilhafte Funktion sieht vor, bei einer Veränderung des Lüftspiels zwischen Bremsbelägen und Bremsscheibe eine Bremsbelagnachstellung bei geschlossener Bremse und konstantem ersten Antriebsdrehmoment umzusetzen.

Hierzu werden gemäß Figur 23 die beiden nicht-linearen Getriebe derart aufeinander abgestimmt, dass die Betätigungs-Getriebeeinheit zur Erzeugung einer gleichbleibenden Zuspannkraft über einen ersten vorbestimmten Drehwinkelbereich (ω1 bis ω₂) bei einem ersten konstanten Antriebsdrehmoment M_{Aktor} = M_{Ca} entgegen der Reaktionskraft bei einem vorbestimmten Hubwert gehalten wird.
Ferner können die beiden nicht-linearen Getriebe derart aufeinander abgestimmt werden, dass die Betätigungs-Getriebeeinheit zur Erzeugung einer gleichbleibenden Zuspannkraft über zumindest einen weiteren vorbestimmten Drehwinkelbereich (ω₃ bis ω₄) bei einem weiteren konstanten Antriebsdrehmoment M_{Aktor} = M_{Cb} entgegen der Reaktionskraft bei einem weiteren vorbestimmten Hubwert gehalten wird.
Vorzugsweise wird dabei als elektromechanischer Aktor ein Elektromotor mit einem Motor-Nennmoment verwendet, wobei das konstante Antriebsdrehmoment auf das Motor-Nennmoment abgestimmt ist.

## Patentansprüche

1. Elektromechanische Betätigungsanordnung (BA) einer elektromechanischen Bremse (B1; B2)
- mit einem elektromechanischen Aktor (A) mit einer nachgeordneten ersten mechanischen Antriebs-Getriebeeinheit (HDG),
- mit einer reversiblen Kraftspeichereinrichtung (F) mit einer nachgeordneten zweiten mechanischen Antriebs-Getriebeeinheit (EG) und
- mit einer um eine Drehachse (32) drehbaren Koppeleinrichtung (K), die eine mechanische Betätigungs-Getriebeeinheit (KTG) einerseits mit einem Abtrieb (6) der ersten mechanischen Antriebs-Getriebeeinheit (HDG) und andererseits mit einem Abtrieb (26) der zweiten mechanische Antriebs-Getriebeeinheit (EG) koppelt,
wobei die zweite mechanische Antriebs-Getriebeeinheit (EG) derart gestaltet ist, dass sie ein nichtlinear vom Drehwinkel (ω) der Koppeleinrichtung (K) abhängiges Antriebsdrehmoment (M_{Exzenter}) in die Koppeleinrichtung (K) einleitet, **dadurch gekennzeichnet, dass** die Koppeleinrichtung (K) zwei mit Kurvenbahnen (11a, 26a) versehene Kurvenkörper (11, 26) drehfest kuppelt, wobei ein erster der Kurvenkörper (11) den Antrieb der Betätigungs-Getriebeeinheit (KTG) und ein zweiter der Kurvenkörper (26) den Abtrieb der zweiten mechanischen Antriebs-Getriebeeinheit (EG) bildet.

2. Elektromechanische Betätigungsanordnung nach Anspruch 1,
**dadurch gekennzeichnet, dass** die Kurvenbahnen (11a, 26a) der beiden Kurvenkörper (11, 26) voneinander unabhängig gestaltete Kurvenformen aufweisen.

3. Elektromechanische Betätigungsanordnung nach einem der Ansprüche 1 oder 2,
**dadurch gekennzeichnet, dass** der den Abtrieb der zweiten mechanischen Antriebs-Getriebeeinheit (EG) bildende zweite Kurvenkörper (26) ein Exzenter mit exzentrischer Seilnut ist,
wobei die exzentrische Seilnut die Kurvenbahn (26a) des zweiten Kurvenkörpers in Form einer Scheibenkurve bildet und wobei ein erstes Ende eines in der exzentrischen Seilnut geführten Seiles (22) an einem Kraftspeicher (23) der reversiblen Kraftspeichereinrichtung (F) und ein zweites Ende des Seiles an dem Exzenter abgestützt ist.

4. Elektromechanische Betätigungsanordnung nach einem der Ansprüche 1 bis 3,
**dadurch gekennzeichnet, dass** der den Antrieb der Betätigungs-Getriebeeinheit (KTG) bildende erste Kurvenkörper (11) von einer ersten Kurventrommel gebildet ist, deren Stirnseite die Kurvenbahn (11a) des ersten Kurvenkörpers in Form einer räumlichen Steuerkurve bildet.

5. Elektromechanische Betätigungsanordnung nach Anspruch 4,
**dadurch gekennzeichnet, dass** die erste Kurventrommel (11) gemeinsam mit einer zweiten Kurventrommel (13) und Wälzkörpern (12b) ein Kurventrommelgetriebe bildet, bei dem der Stirnseite der ersten Kurventrommel die Stirnseite der zweiten Kurventrommel gegenüber steht, die ebenfalls eine Kurvenbahn (13a) in Form einer räumlichen Steuerkurve bildet, und bei dem in einer zwischen den beiden räumlichen Steuerkurven gebildeten Teilungsfuge die Wälzkörper (12b) angeordnet sind, so dass die Summe von Drehmomenten, die mittels der drehbaren Koppeleinrichtung in die erste Kurventrommel eingeleitet werden in eine Hubbewegung der zweiten Kurventrommel umgewandelt werden.

6. Elektromechanische Bremse (B1; B2) mit einem abzubremsenden Glied (101; 201), mit einem Reibbelag (102, 103; 202, 203) zum reibschlüssigen Eingriff mit dem abzubremsenden Glied und mit einer elektromechanischen Betätigungsanordnung (BA) zum Bewegen des Reibbelages in reibschlüssigen Eingriff mit dem abzubremsenden Glied,
**dadurch gekennzeichnet, dass** die elektromechanische Betätigungsanordnung (BA) nach einem der Ansprüche 1 bis 5 ausgebildet ist.

## Claims

1. Electromechanical actuation arrangement (BA) of an electromechanical brake (B1; B2)
- with an electromechanical actuator (A) with a downstream first mechanical drive gear unit (HDG),
- with a reversible force storage device (F) with a downstream second mechanical drive gear unit (EG) and
- with a coupling device (K) able to be rotated around an axis of rotation (32), which on one side couples a mechanical actuation gear unit (KTG) with a takeoff (6) of the first mechanical drive gear unit (HDG) and on the other side with a takeoff (26) of the second mechanical drive gear unit (EG), wherein the second mechanical drive gear unit (EG) is designed such that it introduces into the coupling device (K) a drive torque (M_{eccentric}) that is dependent in a non-linear way on the angle of rotation (ω) of the coupling device (K),
**characterised in that**
the coupling device (K) couples two curved bodies (11, 26) provided with curved tracks (11a 26a) in a torsion-proof manner, wherein a first of the curved bodies (11) forms the drive of the actuation gear unit (KTG) and a second of the curved bodies (26) forms the takeoff of the second mechanical drive gear unit (EG).

2. Electromechanical actuation arrangement according to claim 1,
**characterised in that**
the curved tracks (11a, 26a) of the two curved bodies (11, 26) have curve shapes embodied differently from one another.

3. Electromechanical actuation arrangement according to one of claims 1 or 2,
**characterised in that**
the second curved body (26) forming the takeoff of the second mechanical drive gear unit (EG) is an eccentric with eccentric cable groove,
wherein the eccentric cable groove forms the curved track (26a) of the second curved body in the form of an arc and wherein a first end of a cable (22) guided in the eccentric cable groove is supported against a force store (23) of the reversible force storage device (F) and a second end of the cable is supported against the eccentric.

4. Electromechanical actuation arrangement according to one of claims 1 to 3,
**characterised in that**
the first curved body (11) forming the drive of the actuation gear unit (KTG) is formed by a first curved drum, of which the end face side forms the curved track (11a) of the first curved body in the form of a spatial control curve.

5. Electromechanical actuation arrangement according to claim 4,
**characterised in that**
the first curved drum (11), together with a second curved drum (13) and rollers (12b), forms a curved drum gear, in which the end face side of the first curved drum is opposite the end face side of the second curved drum, which likewise forms a curved track (13a) in the form of a spatial control curve, and in which the rollers (12b) are disposed in a separating joint formed between the two spatial control curves, so that the sum of torques that are introduced by means of the rotatable coupling device into the first curved drum is converted into a lifting movement of the second curved drum.

6. Electromechanical brake (B1; B2) with an element to be braked (101; 201), with a friction lining (102, 103; 202, 203) for frictional engagement with the element to be braked and with an electromechanical actuation arrangement (BA) for moving the friction lining into frictional engagement with the element to be braked,
**characterised in that**
the electromechanical actuation arrangement (BA) is embodied according to one of claims 1 to 5.

## Revendications

1. Agencement ( BA ) d'actionnement électromécanique d'un frein ( B1; B2 ) électromécanique
- comprenant un actionneur ( A ) électromécanique ayant un premier groupe ( HDG ) d'entraînement-transmission mécanique disposé en aval,
- comprenant un dispositif ( F ) réversible d'accumulation de force ayant un deuxième groupe ( EG ) d'entraînement-transmission mécanique disposé en aval et
- comprenant un dispositif ( K ) d'accouplement, qui peut tourner autour d'un axe ( 32 ) de rotation et qui accouple un groupe ( KTG ) d'actionnement-transmission mécanique, d'une part, à une sortie ( 6 ) du premier groupe ( HDG ) d'entraînement-transmission mécanique et, d'autre part, à une sortie ( 26 ) du deuxième groupe ( EG ) d'entraînement-transmission mécanique,
dans lequel le deuxième groupe ( EG ) d'entraînement-transmission mécanique est conformé de manière à appliquer au dispositif ( K ) d'accouplement un couple ( M_{Excenter} ) d'entraînement dépendant non linéairement de l'angle ( ω ) de rotation du dispositif ( K ) d'accouplement,
**caractérisé en ce que**
le dispositif ( K ) d'accouplement accouple d'une manière solidaire en rotation deux pièces ( 11, 26 ) incurvées pourvues de chemins ( 11a, 26a ) incurvés, une première des pièces ( 11 ) incurvées formant l'entraînement du groupe ( KTG ) d'entraînement-transmission et une deuxième des pièces ( 26 ) incurvées formant la sortie du deuxième groupe ( EG ) d'entraînement-transmission mécanique.

2. Agencement d'actionnement électromécanique suivant la revendication 1,
**caractérisé en ce que**
les chemins ( 11a, 26a ) incurvés des deux pièces ( 11, 26 ) incurvées ont des formes de courbe conformées indépendamment l'une de l'autre.

3. Agencement d'actionnement électromécanique suivant l'une des revendications 1 ou 2,
**caractérisé en ce que**
la deuxième pièce ( 26 ) incurvée formant la sortie du deuxième groupe ( EG ) d'entraînement-transmission mécanique est un excentrique ayant une gorge de câble excentrée, la gorge de câble excentrée formant le chemin ( 26a ) incurvé de la deuxième pièce incurvée sous la forme d'une came en disque, une première extrémité d'un câble ( 22 ) guidé dans la gorge de câble excentrée étant appuyée sur un accumulateur ( 23 ) de force du dispositif ( F ) réversible d'accumulateur de force et une seconde extrémité étant appuyée sur l'excentrique.

4. Agencement d'actionnement électromécanique suivant l'une des revendications 1 à 3,
**caractérisé en ce que**
la première pièce ( 11 ) incurvée formant l'entraînement de l'unité ( KTG ) d'actionnement-transmission est formée par une première came en forme de tambour, dont le côté frontal forme le chemin ( 11a ) incurvé de la première pièce incurvée sous la forme d'une came de commande dans l'espace.

5. Agencement d'actionnement électromécanique suivant la revendication 4,
**caractérisé en ce que**
la première came ( 11 ) en forme de tambour forme, conjointement avec une deuxième came ( 13 ) en forme de tambour et des pièces ( 12b ) de roulement, un entraînement à came en forme de tambour, dans lequel le côté frontal de la première came en forme de tambour est opposé au côté frontal de la deuxième came en forme de tambour, qui forme également un chemin ( 13a ) incurvé sous la forme d'une came de commande dans l'espace, et dans lequel les pièces ( 12b ) de roulement sont disposées dans un joint de séparation formé entre les deux cames de commande dans l'espace, de manière à ce que la somme des couples de rotation, qui sont appliqués à la première came en forme de tambour au moyen du dispositif d'accouplement tournant, soit transformée en un mouvement de levage de la deuxième came en forme de tambour.

6. Frein, ( B1; B2 ) électromécanique, comprenant un élément ( 101; 201 ) freiné ayant une garniture ( 102, 103; 202, 203 ) de frottement pour entrer en contact de frottement avec l'élément à freiner et comprenant un agencement ( FA ) d'actionnement électromécanique pour le déplacement de la garniture de frottement en contact de frottement avec l'élément à freiner,
**caractérisé en ce que**
l'agencement ( BA ) d'actionnement électromécanique est constitué suivant l'une des revendications 1 à 5.
